(19) Europäisches Patentamt
European Patent Office
Office européen des brevets

(11) **EP 2 440 795 B1**

(12) **FASCICULE DE BREVET EUROPEEN**

(45) Date de publication et mention
de la délivrance du brevet:
**01.06.2016 Bulletin 2016/22**

(51) Int Cl.:
***F16B 5/02*** (2006.01)

(21) Numéro de dépôt: **10737959.6**

(86) Numéro de dépôt international:
**PCT/FR2010/051126**

(22) Date de dépôt: **08.06.2010**

(87) Numéro de publication internationale:
**WO 2010/142901 (16.12.2010 Gazette 2010/50)**

(54) **FAMILLE DE DISPOSITIFS DE FIXATION À CONICITÉ VARIABLE**

FAMILIE VON BEFESTIGUNGSMITTELN MIT VARIABLER KONUSFORM

FAMILY OF FIXATION DEVICES WITH VARIABLE TAPER

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **13.06.2009 FR 0953959**

(43) Date de publication de la demande:
**18.04.2012 Bulletin 2012/16**

(73) Titulaire: **Lisi Aerospace**
**75012 Paris (FR)**

(72) Inventeur: **GUERIN, Nicolas**
**F-95540 Mery Sur Oise (FR)**

(74) Mandataire: **Ipside**
**7-9 Allées Haussmann**
**33300 Bordeaux Cedex (FR)**

(56) Documents cités:
**DE-A1-102005 008 497    US-A- 4 048 898**

**Description**

La présente invention se rapporte à une famille de dispositifs de fixation à conicité variable. Le domaine technique de l'invention est, d'une façon générale, celui des vis et des douilles. Plus particulièrement, l'invention concerne des vis et des douilles destinées à assembler des éléments de structure d'avion préalablement alésés de manière cylindrique.

Dans l'état de la technique, pour mettre en place des dispositifs de fixation au sein de tels éléments structurels, on connaît des vis cylindriques et/ou tronconiques réalisées en matériau métallique et recouvertes d'un revêtement favorisant leur glissement au sein d'un alésage d'éléments à assembler.

Dans l'art antérieur, on connaît également l'enseignement des documents US4048898, US4702658, et US3270410 qui divulguent, respectivement, un dispositif tronconique de fixation d'éléments métalliques multicouches, un dispositif de réduction des forces et des coûts d'installation d'un dispositif tronconique de fixation et un procédé de fixation pour installer des précontraintes dans un matériau. Les fixations à fût conique sont habituellement utilisées par les constructeurs d'avions dans les zones à assembler qui présentent des difficultés d'accessibilité et qui nécessite une mise en interférence. L'interférence est définie par l'installation d'une vis ayant une partie lisse qui a un diamètre extérieur plus important que le diamètre d'alésage qui va la recevoir, ce qui amène une expansion de l'alésage durant l'installation de la vis. Dans le cas des matériaux métalliques, l'installation des vis en interférence se fait simplement en les tirant ou en les enfonçant dans l'alésage ce qui moyennant une conception optimisée du rayon d'entrée du fût de la vis et d'un revêtement à faible coefficient de friction ne provoque pas d'endommagement de la structure. Pour les matériaux métalliques, l'installation en interférence permet d'augmenter la durée de vie en fatigue de la structure.

La nouvelle génération d'avions utilise une structure en matériau composite qui a l'avantage d'alléger de manière significative l'avion et qui n'est pas sensible au phénomène de fatigue mais, contrairement à une structure métallique, a l'inconvénient d'une mauvaise conductivité et pose des problèmes de résistance aux impacts de foudre. Afin de résister à la foudre, il est là aussi nécessaire de combler tout jeu qui existerait entre la fixation et l'alésage imposant ainsi une installation en interférence dans les composites.

L'installation en interférence d'une fixation dans une structure composite présente des risques importants de délamination de ce dernier due au frottement de la partie lisse de la fixation sur l'alésage dans la structure composite, ce qui peut conduire à un endommagement par délaminage et donc une moindre résistance.

Ainsi l'utilisation d'une douille recouvrant la partie lisse de la fixation et installée, dans un premier temps, avec jeu dans la structure, s'avère nécessaire afin de protéger le matériau composite de toute délamination. Dans un deuxième temps, une expansion radiale de cette douille est requise de sorte que le jeu n'existe plus pour les raisons qui ont été vues précédemment.

Pour le cas des fixations à fût conique, la réalisation d'alésages coniques dans les structures d'avion présente une certaine difficulté et incite l'homme du métier à utiliser une vis à fût conique chemisée d'une douille cylindro-conique, par exemple en acier inoxydable. Ce dispositif est ensuite installé dans l'alésage cylindrique de la structure afin de s'affranchir de l'usinage d'alésage conique.

L'état de la technique actuel, basé sur le brevet US 4,048,898 utilise une douille cylindrique extérieurement et conique à l'intérieur, qui accueille une vis à fût conique. Suivant les épaisseurs à assembler, la partie lisse augmente en longueur mais également en diamètre.

On a donc, dans l'état de la technique, autant de références de dispositifs de fixation que d'épaisseurs différentes d'éléments à assembler. Autrement dit, plus les éléments à assembler sont épais, plus le diamètre d'alésage desdits éléments et le diamètre de la douille sont grands. Cette grande diversité constitue un problème technique majeur pour l'homme du métier. En effet, il doit prévoir l'outil et le dispositif adéquates pour chaque épaisseur d'élément à serrer, ce qui représente un coût en outillage important et également une perte de temps due au changement d'outillage. De plus le fait d'avoir une diversité de taille d'alésage ne permet pas de prédire de façon simple et robuste la tenue structurale des éléments assemblés.

L'homme du métier a résolu une partie du problème en créant des familles de perçage et de longueur, par repère de diamètre de fixation, et ainsi a réduit le nombre d'outillages mais sans aboutir à un outillage unique quelque soit la longueur à serrer comme il existe pour les fixations à partie lisse cylindrique.

Dans l'invention, pour résoudre ce problème, on a eu l'idée d'adapter un taux de conicité du dispositif en fonction de sa hauteur. On entend par taux de conicité, un rapport, en pourcentage, de la différence entre le plus grand diamètre et le plus petit diamètre du tronc de cône par sa hauteur. Le taux de conicité est donc défini par la formule suivante : $C = (D - d)/H$

L'invention peut également avoir des applications dans des structures mixtes c'est à dire utilisant des matériaux composites et métalliques du type alliage d'aluminium ou de titane par exemple, le dispositif sera installé dans une succession de couches métallique/composite qui forme la structure de l'avion; ou également dans des structures uniquement métalliques du type aluminium ou titane par exemple, dans ce cas il n'y aura pas de risques de délamination mais l'intérêt de l'utilisation de l'invention résidera dans le fait de l'élimination de perçages coniques.

Le taux de conicité des douilles selon l'invention est compris entre quelques dixièmes de pourcent et 10%. Ainsi, avec trois ou quatre jeux de dispositifs de même diamètre extérieur, mais de taux de conicité différent, on peut serrer toutes les configurations d'épaisseur rencontrées dans les assemblages structuraux, typiquement allant de une fois à dix fois le diamètre du dispositif, et ce sans modifier l'alésage des éléments à assembler.

L'invention a donc pour objet une famille de dispositifs de fixation d'éléments préalablement alésés de manière cylindrique, chaque dispositif comportant

- une vis s'étendant suivant un axe et comportant un fût tronconique et une tête,
- une douille destinée à recevoir le fût de la vis en son sein, la douille s'étendant suivant le même axe et présentant une surface extérieure cylindrique et une surface intérieure tronconique,

caractérisé en ce que

- elle comporte au moins deux dispositifs dont les douilles présentent, avant mise en interférence, un diamètre extérieur identique et un taux de conicité de surface intérieure différent.

L'invention et ses différentes applications seront mieux comprises à la lecture de la description qui suit et à l'examen des figures qui l'accompagnent. Celles-ci ne sont présentées qu'à titre indicatif et nullement limitatif de l'invention. Les figures montrent :

- figure 1: une représentation schématique d'une vue en coupe d'un premier exemple de famille de dispositifs de fixation selon l'invention ;
- figure 2 : une représentation schématique d'une vue en coupe d'un autre exemple de dispositif de fixation selon l'invention ;
- figure 3 : une représentation schématique d'une vue en coupe des douilles d'un deuxième exemple de famille de dispositifs de fixation selon l'invention ;
- figure 4 : une représentation schématique d'une vue rapprochée des plages de serrage.

Dans ces figures, les éléments identiques conservent les mêmes références.

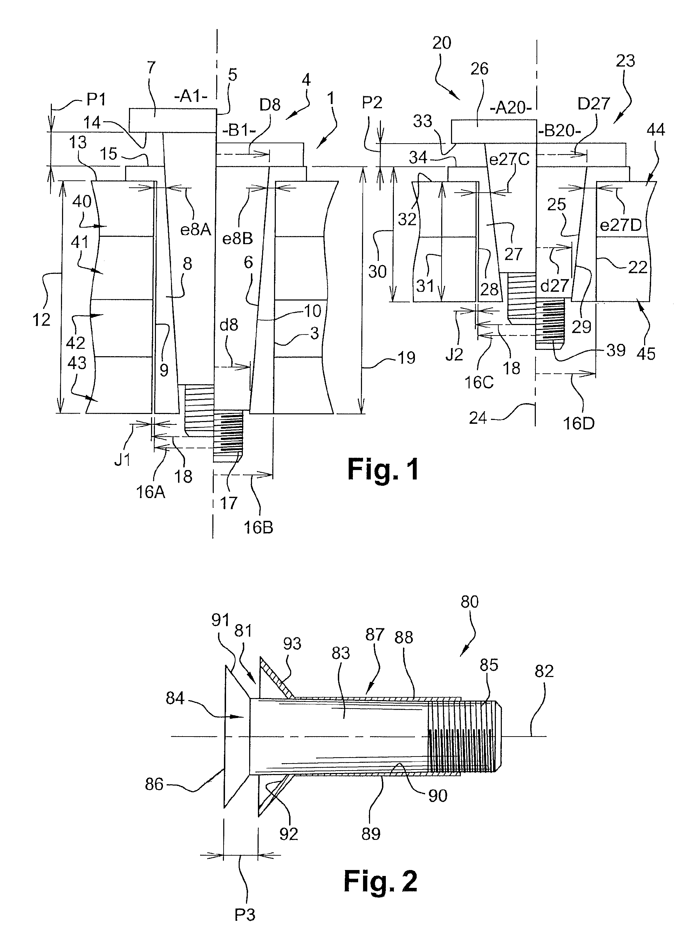

La figure 1 représente, de façon schématique, une vue en coupe d'un premier exemple de famille de dispositifs de fixation d'éléments, selon l'invention. Dans un exemple, les éléments à assembler constituent une structure d'avion et la famille comporte deux dispositifs de fixation 1 et 20.

Le dispositif 1 est représenté, du côté gauche A1 de son axe de symétrie 5 le traversant en son milieu, avant mise en interférence c'est à dire au tout début de l'installation, quand celui ci a été inséré sans effort, avec jeu et sans expansion radiale, dans la structure de l'avion. Le dispositif est représenté après mise en interférence par expansion radiale dans la structure, du côté droit B1 de l'axe 5, le plan de coupe étant défini par cet axe 5.

Le dispositif 20 est représenté avant mise en interférence, du côté gauche A20 de son axe de symétrie 24 le traversant en son milieu. Le dispositif est représenté après mise en interférence, du côté droit B20 de l'axe 24, le plan de coupe étant défini par cet axe 24.

Le dispositif 1 de fixation est destiné à assembler quatre éléments structuraux 40, 41, 42 et 43 préalablement alésés 3 de manière cylindrique, avec un diamètre 18. Dans un premier exemple, les éléments 40, 41, 42 et 43 à assembler présentent une épaisseur globale référencée 12. Le dispositif 1 comporte une vis 4 s'étendant suivant l'axe 5. La vis 4 comporte un fût tronconique 6 se prolongeant d'un côté en une tête cylindrique plate 7 et, de l'autre côté, en un filetage 17. La tête 7 forme un disque dont le plan est perpendiculaire à l'axe 5, le disque étant destiné à être disposé de manière sensiblement parallèle à une surface supérieure 13 de l'élément.

Le dispositif 1 comporte également une douille 8 destinée à recevoir le fût tronconique 6 de la vis 4 en son sein. La douille 8 s'étend suivant le même axe 5 et présente une surface extérieure cylindrique 9 et une surface intérieure tronconique 10.

Une distance, dite protrusion P1, sépare, avant mise en interférence, une surface inférieure 14 de la tête 7 de vis 4 et une surface supérieure 15 de la douille 8.

Pour qu'une introduction du dispositif 1 au sein de l'alésage cylindrique 3 soit possible, un jeu initial J1 de montage entre un diamètre extérieur 16A de la douille 8 avant mise en interférence et le diamètre 18 d'alésage des éléments 40, 41, 42 et 43 est prévu. Dans le cas d'assemblage de grande précision, le jeu initial et l'expansion sont maîtrisés par un pré-usinage en usine, du diamètre extérieur avec une précision de l'ordre de quelques dizaines de microns, de la douille avec sa vis pré-emmanchée à la protrusion P1, elle-même maîtrisée également en usine.

Le dispositif 20 de fixation est destiné à assembler deux éléments structuraux 44 et 45 préalablement alésés 22 de manière cylindrique, avec le même diamètre 18. Dans ce deuxième exemple, les éléments à assembler comporte deux couches 44 et 45 dont l'épaisseur globale est référencée 31. Le dispositif 20 comporte une vis 23 s'étendant suivant l'axe 24. La vis 23 comporte un fût tronconique 25 se prolongeant d'un côté en une tête cylindrique plate 26 et, de l'autre côté, en un filetage 39. La tête 26 forme un disque dont le plan est perpendiculaire à l'axe 24, le disque étant destiné à être disposé de manière sensiblement parallèle à une surface supérieure 32 de l'élément 44.

Le dispositif 20 comporte également une douille 27 destinée à recevoir le fût tronconique 25 de la vis 23 en son sein. La douille 27 s'étend suivant le même axe 24 et présente une surface extérieure cylindrique 28 et une surface intérieure tronconique 29.

Une protrusion P2, sépare, avant mise en interférence, une surface inférieure 33 de la tête 26 de vis 23 et une surface supérieure 34 de la douille 27.

Pour qu'une introduction du dispositif 20 au sein de l'alésage cylindrique 22 soit possible, un jeu initial J2 de montage entre un diamètre extérieur 16C de la douille 27 avant mise en interférence et le diamètre 18 d'alésage des éléments 44 et 45 est prévu.

Pour assembler les éléments 40, 41, 42 et 43 d'une part et 44 et 45 d'autre part, on enfonce les vis 4 et 23 en tirant par via un écrou vissé autour du filetage 17 ou à l'aide d'un mandrin de traction ou en poussant sur la tête. Ainsi, on réalise une interférence entre la vis, la douille et l'élément à assembler, sur toute l'épaisseur. Cette interférence correspondant à une différence IF1 et IF2 entre un diamètre 18 de l'alésage et un diamètre extérieur 16B et 16D de la douille après mise en interférence. L'interférence est choisie et prédéterminée pour au moins compenser le jeu initial, i.e. combler l'espace vide, en exerçant une pression radiale sur l'élément à assembler, et pour pré-contraindre ainsi l'assemblage radialement.

Du fait de la conservation des volumes, une réduction d'épaisseur Δ1 et Δ2 de la douille s'opère lors de la mise en interférence. En effet, à l'extrémité supérieure des douilles 8 et 27, les épaisseurs e8A et e27C, avant mise en interférence, sont supérieures aux épaisseurs, après mise en interférence, e8B et e27D respectivement. Dans un but de simplification, on considère que la variation d'épaisseur sera la même tout le long de la douille.

Les deux dispositifs 1 et 20 comportent donc des douilles 8 et 27 présentant, avant mise en interférence, un diamètre extérieur 16A et 16C identique et un taux C1 et C2 de conicité de surface intérieure différent. Plus précisément, le taux de conicité formé par l'axe 5 et 24 et la surface tronconique 10 et 29 des douilles 8 et 27, respectivement, varie à l'inverse de la hauteur 19 et 30 des douilles 8 et 27 respectivement.

Typiquement, le taux de conicité est compris entre quelques dixièmes de pourcent et 10%, de préférence entre 1% et 4%. Dans le mode préférentiel, le taux de conicité du fût 6 et 25 de la vis 4 et 23 est le même que celui de la surface intérieure 10 et 29 de la douille 8 et 27, respectivement. Dans une alternative, le taux de conicité du fût 6 et 25 de la vis 4 et 23 peut être sensiblement différent de la surface intérieure 10 et 29 de la douille 8 et 27 afin de générer une interférence variable, de façon maîtrisée, le long de l'épaisseur. Dans une autre alternative, le taux de conicité peut varier localement au sein d'une même sous-famille de manière à ajuster l'interférence dans une zone définie.

Le taux de conicité est fonction de l'interférence IF, la protrusion P, la réduction d'épaisseur Δ et le jeu J, selon la formule : C = (IF + J + Δ) / P.

Selon l'invention, la hauteur 19 et 30 des douilles 8 et 27 correspond, au minimum, à une fois leur diamètre extérieur après mise en interférence 16B et 16D et, au maximum, à dix fois ce diamètre. Un taux d'interférence défini par la valeur de l'interférence choisie rapportée au diamètre extérieur de la douille avant mise en interférence, varie entre 0 et 3%.

En résumé, on a :

$$IF1 = 16B - 18 \text{ et } IF2 = 16D - 18 \; ;$$

$$J1 = 18 - 16A \text{ et } J2 = 18 - 16C \; ;$$

$$\Delta1 = 2(e8A - e8B) \text{ et } \Delta2 = 2(e27C - e27D).$$

Dans un exemple chiffré, on peut avoir J = 0,05mm ; Δ = 0,1 mm ; IF = 0,05 mm; et P = 10mm ; auquel cas, on aurait :

$$C = (0,05+0,05+0,1)/10 = 0,2 /10$$
$$= 2 \%.$$

Le taux de conicité de la douille 8 est ici égal au rapport, en pourcentage, de la différence entre son plus grand diamètre D8 et son plus petit diamètre d8 de sa surface intérieure tronconique 10 par sa hauteur 19. Autrement dit, C8 = (D8 - d8)/19.

Le taux de conicité de la douille 27 est ici égal au rapport, en pourcentage, de la différence entre son plus grand diamètre D27 et son plus petit diamètre d27 de sa surface intérieure tronconique 29 par sa hauteur 30. Autrement dit, C27 = (D27 - d27)/30.

La figure 2 représente, de façon schématique, une vue en coupe d'un autre exemple de dispositif de fixation 80 selon l'invention. Il s'agit d'un dispositif à tête fraisée. Le dispositif 80 comporte une vis 81 s'étendant suivant un axe 82. La vis 81 comporte un fût tronconique 83 se prolongeant d'un côté en une tête fraisée 84 et, de l'autre côté, en un filetage 85. L'extrémité supérieure 86 de la tête fraisée 84 forme un disque dont le plan est perpendiculaire à l'axe 82, le disque étant destiné à être disposé de manière sensiblement parallèle à une surface supérieure des éléments à assembler.

Le dispositif 80 comporte également une douille 87 adaptée pour et destinée la vis 81. La douille 87 comporte un fût cylindro-conique 88 apte à recevoir le fût tronconique 83 de la vis 81 en son sein et une partie tronconique 93 apte à recevoir la tête fraisée 84. La douille 87 s'étend suivant le même axe 82 et présente une surface extérieure cylindrique 89 et une surface intérieure tronconique 90.

Une distance, dite protrusion P3, sépare, avant mise en interférence, une surface inférieure 91 de la tête 84 de vis 81 et une surface supérieure 92 de la douille 87.

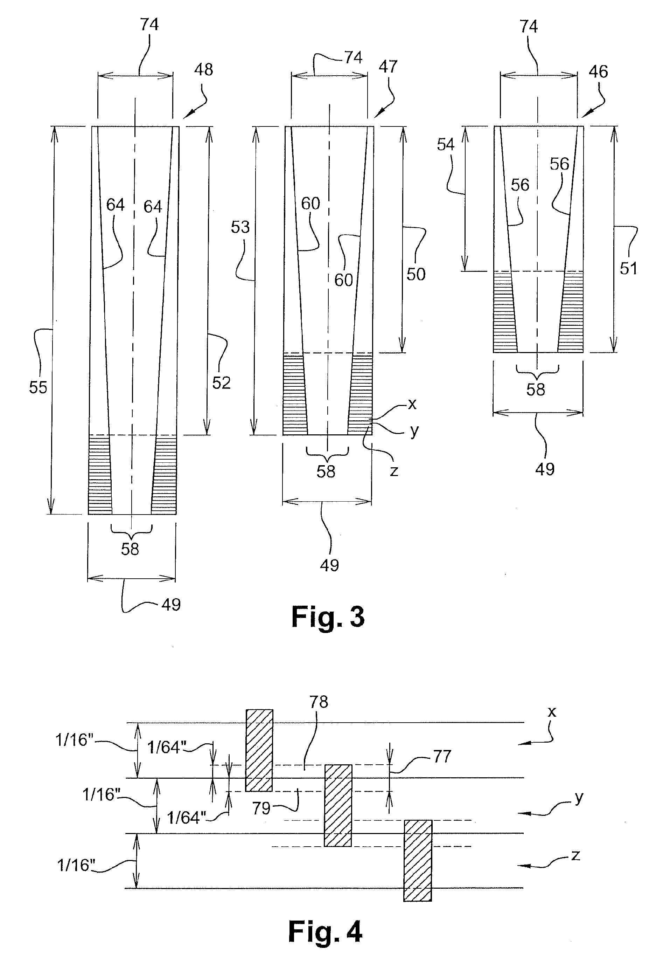

La figure 3 représente, de façon schématique, une vue en coupe des douilles d'une famille de dispositifs de fixation selon l'invention.

Selon l'invention, la famille de dispositifs, pour un diamètre donné, est constituée de N sous-familles, chaque sous-famille comportant plusieurs dispositifs présentant des hauteurs différentes et un taux de conicité identique.

Dans l'exemple, la famille comporte, pour un diamètre 49, trois sous-familles 46, 47 et 48 dont les taux de conicité sont, respectivement de 1%, 2,5% et 4% et dont le diamètre extérieur 49 est identique.

Selon l'invention, de manière générale, pour une sous-famille N, la hauteur minimale d'une douille est égale à la hauteur maximale d'une douille de la sous-famille N-1 de manière à avoir une continuité sur la plage des épaisseurs à serrer.

Dans l'exemple, la hauteur minimale 50 de douille de la sous-famille 47 est égale à la hauteur maximale 51 de douille de la sous-famille 46 et la hauteur minimale 52 de douille de la sous-famille 48 est égale à la hauteur maximale 53 de douille de la sous-famille 47.

La hauteur des douilles évolue par intervalles de seizièmes de pouce, i.e. de 1,5875 millimètres. Sur la figure 3, une multitude de traits pleins parallèles horizontaux représente des hauteurs de douilles distantes d'un seizième de pouce dans chacune des sous-familles 46, 47 et 48.

Dans un exemple chiffré, le diamètre extérieur minimal d'une douille est de 15,04mm, avec une hauteur comprise entre une fois ce diamètre, c'est-à-dire 15,04mm et dix fois ce diamètre, c'est-à-dire 150,4 mm.

Dans l'exemple de la figure 3, la hauteur minimale 54 de douille de la sous-famille 46 mesure une fois et demi son diamètre extérieur, à savoir 1,5 x 35mm = 52 mm et la hauteur maximale 55 de douille de la sous-famille 48 mesure environ quatre fois son diamètre extérieur = 142 mm. Autrement dit, la famille selon l'invention comportant les trois sous-familles 46, 47 et 48 permet de serrer des éléments alésés avec un diamètre très légèrement supérieur à 35 mm, et présentant une épaisseur comprise entre 52 millimètres et 142 millimètres.

Selon l'invention, respectivement les diamètres 49 et 74 sont identiques pour tous les dispositifs des trois sous-familles 46, 47 et 48, quelle que soit leur hauteur.

Dans l'exemple, le plus petit diamètre 58 de surface intérieure est le même pour chaque dispositif ayant la hauteur la plus grande des trois sous-familles 46, 47 et 48.

Dans une variante, au sein d'une famille, le diamètre 58 est différent pour chaque dispositif le plus grand d'une sous-famille.

Dans la sous-famille 46, les traits pleins obliques 56 correspondent à la surface intérieure tronconique de la douille de plus grande hauteur 51. Le plus petit diamètre intérieur 58 de la plus grande douille est projeté suivant ce tronc de cône 56 et varie donc en fonction de la hauteur de la douille. De ce fait, toutes les douilles de la sous-famille 46 présentent un taux de conicité identique.

Le taux de conicité des douilles de la sous-famille 46 est ici égal, par exemple, au rapport, en pourcentage, de la différence entre le plus grand diamètre 74 et le plus petit diamètre 58 de sa surface intérieure tronconique 56 par sa hauteur 51.

Dans la sous-famille 47, les traits pleins obliques 60 correspondent à la surface intérieure tronconique de la douille de plus grande hauteur 53. Le plus petit diamètre intérieur 58 de la plus grande douille est projeté suivant ce tronc de cône 60 et varie donc en fonction de la hauteur de la douille. De ce fait, toutes les douilles de la sous-famille 47 présentent un taux de conicité identique.

Le taux de conicité des douilles de la sous-famille 47 est ici égal, par exemple, au rapport, en pourcentage, de la différence entre le plus grand diamètre 74 et le plus petit diamètre 58 de sa surface intérieure tronconique 60 par sa hauteur 53.

La sous-famille 47 comporte en particulier trois douilles X, Y et Z de hauteur différente. Chaque hauteur étant séparée d'un seizième de pouce.

Dans la sous-famille 48, les traits pleins obliques 64 correspondent à la surface intérieure tronconique de la douille de plus grande hauteur 55. Le plus petit diamètre intérieur 58 de la plus grande douille est projeté suivant ce tronc de cône 64 et varie donc en fonction de la hauteur de la douille. De ce fait, toutes les douilles de la sous-famille 48 présentent un taux de conicité identique.

Le taux de conicité des douilles de la sous-famille 48 est ici égal, par exemple, au rapport, en pourcentage, de la différence entre le plus grand diamètre 74 et le plus petit diamètre 58 de sa surface intérieure tronconique 64 par sa hauteur 55.

La figure 4 représente, de façon schématique, une vue rapprochée des plages de serrage acceptables par les dispositifs X, Y et Z. La plage de serrage étant la différence entre le maximum et le minimum des épaisseurs de structure qu'il est possible d'assembler avec un dispositif. Une plage de recouvrement 77 permet d'utiliser indifféremment la douille X ou Y pour serrer une même épaisseur d'élément comprise dans cette plage. Dans l'exemple, la plage de recouvrement 77 correspond à une double marge 78 et 79 d'un soixante-quatrième de pouce chacune.

Cette plage de recouvrement 77 d'un trente-deuxième de pouce permet d'assembler une épaisseur de structure comprise dans cette plage de recouvrement que ce soit avec la douille X ou Y, ceci présente un intérêt quand l'épaisseur à serrer se trouve proche de la fin de la plage de serrage de X ou au tout début de la plage de serrage de Y et qu'une incertitude existe dans le choix de X ou Y. Cette plage de recouvrement 77 peut également permettre de compenser un tassement de la structure pendant l'assemblage.

## Revendications

**1.** Famille de dispositifs (1 ; 20 ; 80) de fixation d'éléments (40 ; 41 ; 42 ; 43 ; 44 ; 45) préalablement alésés (3 ; 22) de manière cylindrique, chaque dispositif comportant /

- une vis (4 ; 23 ; 81) s'étendant suivant un axe (5 ; 24 ; 82) et comportant un fût tronconique (6 ; 25 ; 83) et une tête (7 ; 26 ; 84),
- une douille (8 ; 27 ; 87) destinée à recevoir le fût de la vis en son sein, la douille s'étendant suivant le même axe et présentant une surface extérieure cylindrique (9 ; 28 ; 89) et une surface intérieure tronconique (10 ; 29 ; 90),

**caractérisé en ce que**

- elle comporte au moins deux dispositifs dont les douilles présentent, avant mise en interférence, un diamètre extérieur (16A ; 16C) identique et un taux (C1 ; C2) de conicité de surface intérieure différent.

**2.** Famille selon la revendication 1, **caractérisée en ce que**

- le taux de conicité est compris entre 1% et 10%, de préférence entre 1 % et 4%.

**3.** Famille selon l'une des revendications 1 à 2, **caractérisée en ce que** le taux de conicité est fonction de

- une interférence (IF1 ; IF2) choisie et prédéterminée entre la douille et les éléments à assembler, cette interférence correspondant à une différence entre un diamètre (18) de l'alésage et un diamètre extérieur (16B ; 16D) de la douille après mise en interférence,
- une distance, dite protrusion (P1 ; P2), avant mise en interférence, entre une surface inférieure (14 ; 33 ; 91) de la tête de vis et une surface supérieure (15 ; 34 ; 92) de la douille, et
- un jeu initial (J1 ; J2) de montage entre le diamètre extérieur de la douille avant mise en interférence et le diamètre d'alésage de l'élément,
- une réduction ($\Delta 1$ ; $\Delta 2$) d'épaisseur (e8A ; e8B ; e27C ; e27D) de la douille après mise en interférence,

selon la formule : $C = (IF + J + \Delta) / P$.

**4.** Famille selon l'une des revendications 1 à 3, **caractérisée en ce que**

- la hauteur des douilles correspond, au minimum, à une fois leur diamètre extérieur après mise en interférence et, au maximum, à dix fois ce diamètre.

5. Famille selon l'une des revendications 1 à 4, **caractérisée en ce que**

   - le taux de conicité du fût de la vis est le même que celui de la surface intérieure de la douille.

6. Famille selon l'une des revendications 1 à 4, **caractérisée en ce que**

   - le taux de conicité du fût de la vis est différent de celui de la surface intérieur de la douille.

7. Famille selon l'une des revendications 1 à 4, **caractérisée en ce que**

   - le taux de conicité varie localement au sein d'une même sous-famille.

8. Famille selon l'une des revendications 1 à 7, **caractérisée en ce que**

   - elle est constituée de N sous-familles (46 ; 47 ; 48), chaque sous-famille de conicité comportant une multitude de dispositifs présentant des hauteurs différentes.

9. Famille selon l'une des revendications 1 à 8, **caractérisée en ce que**

   - elle comporte au moins trois sous-familles dont les taux de conicité sont, de préférence de 1 %, 2,5% et 4%.

10. Famille selon l'une des revendications 1 à 9, **caractérisée en ce que**

    - un taux d'interférence défini par la valeur de l'interférence choisie rapportée au diamètre extérieur de la douille avant mise en interférence, varie entre 0 et 3%.

11. Famille selon l'une des revendications 1 à 10, **caractérisée en ce que**

    - la hauteur des douilles évolue par intervalles de 1,5875 mm.

12. Famille selon l'une des revendications 1 à 11, **caractérisée en ce que**

    - deux dispositifs successifs d'une même sous-famille ayant une différence de hauteur de 1,5875mm ont leurs plages de serrage qui se recouvrent de 0,79375 mm.

13. Famille selon l'une des revendications 1 à 12, **caractérisée en ce que**

    - la tête de vis est de forme cylindrique ou fraisée et la douille associée est adaptée pour recevoir cette vis ayant une tête cylindrique ou fraisée.

**Patentansprüche**

1. Familie von Vorrichtungen (1; 20; 80) für die Befestigung von im Voraus zylindrisch aufgebohrten (3; 22) Elementen (40; 41; 42; 43; 44; 45), wobei jede Vorrichtung Folgendes umfasst:

   - eine Schraube (4; 23; 81), die sich längs einer Achse (5; 24; 82) erstreckt und einen kegelstumpfförmigen Schaft (6; 25; 83) und einen Kopf (7; 26; 84) aufweist,
   - eine Hülse (8; 27; 87), die dazu bestimmt ist, den Schaft der Schraube in sich aufzunehmen, wobei sich die Hülse längs derselben Achse erstreckt und eine zylindrische äußere Oberfläche (9; 28; 89) und eine kegelstumpfförmige innere Oberfläche (10; 29; 90) aufweist,

   **dadurch gekennzeichnet, dass**

   - sie wenigstens zwei Vorrichtungen umfasst, deren Hülsen vor dem Herstellen des Eingriffs den gleichen Außendurchmesser (16A; 16C) und einen unterschiedlichen Konizitätsgrad (C1; C2) der inneren Oberfläche

7

aufweisen.

2. Familie nach Anspruch 1, **dadurch gekennzeichnet, dass**

   - der Konizitätsgrad im Bereich von 1 % bis 10 %, vorzugsweise von 1 % bis 4 %, liegt.

3. Familie nach einem der Ansprüche 1 bis 2, **dadurch gekennzeichnet, dass** der Konizitätsgrad eine Funktion ist:

   - eines ausgewählten und vorgegebenen Eingriffs (IF1; IF2) zwischen der Hülse und den zusammenzufügenden Elementen, wobei dieser Eingriff einem Unterschied zwischen einem Durchmesser (18) der Bohrung und einem Außendurchmesser (16B; 16D) der Hülse nach dem Herstellen des Eingriffs entspricht,
   - eines Abstands, der Vorsprung (P1; P2) genannt wird, vor dem Herstellen des Eingriffs zwischen der inneren Oberfläche (14; 33; 91) des Schraubenkopfes und einer oberen Oberfläche (15; 34; 92) der Hülse, und
   - eines anfänglichen Montagespiels (J1; J2) zwischen dem Außendurchmesser der Hülse vor dem Herstellen des Eingriffs und dem Bohrungsdurchmesser des Elements,
   - einer Abnahme ($\Delta 1$; $\Delta 2$) der Dicke (e8A; e8B; e27C; e27D) der Hülse nach dem Herstellen des Eingriffs gemäß der Formel: $C = (IF + J + \Delta)/P$.

4. Familie nach einem der Ansprüche 1 bis 3, **dadurch gekennzeichnet, dass**

   - die Höhe der Hülsen mindestens ihrem einfachen Außendurchmesser nach dem Herstellen des Eingriffs und höchstens diesem zehnfachen Durchmesser entspricht.

5. Familie nach einem der Ansprüche 1 bis 4, **dadurch gekennzeichnet, dass**

   - der Konizitätsgrad des Schafts der Schraube gleich jenem der inneren Oberfläche der Hülse ist.

6. Familie nach einem der Ansprüche 1 bis 4, **dadurch gekennzeichnet, dass**

   - der Konizitätsgrad des Schafts der Schraube von jenem der inneren Oberfläche der Hülse verschieden ist.

7. Familie nach einem der Ansprüche 1 bis 4, **dadurch gekennzeichnet, dass**

   - der Konizitätsgrad sich in der gleichen Unterfamilie lokal verändert.

8. Familie nach einem der Ansprüche 1 bis 7, **dadurch gekennzeichnet, dass**

   - sie aus N Unterfamilien (46; 47; 48) gebildet ist, wobei jede Konizitätsunterfamilie mehrere Vorrichtungen umfasst, die unterschiedliche Höhen aufweisen.

9. Familie nach einem der Ansprüche 1 bis 8, **dadurch gekennzeichnet, dass**

   - sie wenigstens drei Unterfamilien umfasst, deren Konizitätsgrade vorzugsweise 1 %, 2,5 % und 4 % betragen.

10. Familie nach einem der Ansprüche 1 bis 9, **dadurch gekennzeichnet, dass**

    - ein Eingriffgrad, der durch den Wert des ausgewählten Eingriffs in Bezug auf den Außendurchmesser der Hülse vor dem Herstellen des Eingriffs definiert ist, im Bereich von 0 bis 3 % variiert.

11. Familie nach einem der Ansprüche 1 bis 10, **dadurch gekennzeichnet, dass**

    - die Höhe der Hülsen sich in Intervallen von 1,5875 mm ändert.

12. Familie nach einem der Ansprüche 1 bis 11, **dadurch gekennzeichnet, dass**

    - zwei aufeinander folgende Vorrichtungen derselben Unterfamilie, die eine Höhendifferenz von 1,5875 mm haben, Klemmbereiche besitzen, die um 0,79375 mm überlappen.

13. Familie nach einem der Ansprüche 1 bis 12, **dadurch gekennzeichnet, dass**

- der Schraubenkopf eine zylindrische Form hat oder gefräst ist und die zugeordnete Hülse dafür ausgelegt ist, diese Schraube mit einem zylindrischen oder gefrästen Kopf aufzunehmen.

**Claims**

1. Family of devices (1; 20; 80) for fastening elements (40; 41; 42; 43; 44; 45) previously cylindrically bored (3; 22), each device comprising:

- a screw (4; 23; 81) extending along an axis (5; 24; 82) and comprising a frustoconical shaft (6; 25; 83) and a head (7; 26; 84),
- a bushing (8; 27; 87) intended to accommodate the shaft of the screw within itself, the bushing extending along the same axis and having a cylindrical outer surface (9; 28; 89) and a frustoconical inner surface (10; 29; 90),

**characterized in that**

- it comprises at least two devices of which the bushings have, before installation by interference, an identical outer diameter (16A; 16C) and a different rate (C1; C2) of taper of the inner surface.

2. Family according to Claim 1, **characterized in that**

- the rate of taper is between 1% and 10%, preferably between 1% and 4%.

3. Family according to either of Claims 1 and 2, **characterized in that** the rate of taper is a function of

- a chosen and predetermined interference (IF1; IF2) between the bushing and the elements to be assembled, this interference corresponding to a difference between a diameter (18) of the bore and an outer diameter (16B; 16D) of the bushing after installation by interference,
- a distance referred to as a protrusion (P1; P2), before installation by interference, between a lower surface (14; 33; 91) of the screw head and an upper surface (15; 34; 92) of the bushing, and
- an initial assembly clearance (J1; J2) between the outer diameter of the bushing before installation by interference and the bore diameter of the element,
- a reduction ($\Delta1$; $\Delta2$) in the thickness (e8A; e8B; e27C; e27D) of the bushing after installation by interference,

according to the formula: C = (IF + J + $\Delta$)/P.

4. Family according to one of Claims 1 to 3, **characterized in that**

- the height of the bushings corresponds, at least, to one times their outer diameter after installation by interference and, at most, to ten times this diameter.

5. Family according to one of Claims 1 to 4, **characterized in that**

- the rate of taper of the shaft of the screw is the same as that of the inner surface of the bushing.

6. Family according to one of Claims 1 to 4, **characterized in that**

- the rate of taper of the shaft of the screw is different from that of the inner surface of the bushing.

7. Family according to one of Claims 1 to 4, **characterized in that**

- the rate of taper varies locally within one and the same subfamily.

8. Family according to one of Claims 1 to 7, **characterized in that**

- it is made up of N subfamilies (46; 47; 48), each taper subfamily comprising a multitude of devices having different heights.

9. Family according to one of Claims 1 to 8, **characterized in that**

- it comprises at least three subfamilies of which the rates of taper are preferably 1%, 2.5% and 4%.

10. Family according to one of Claims 1 to 9, **characterized in that**

- a rate of interference defined by the interference value chosen in relation to the outer diameter of the bushing before installation by interference varies between 0 and 3%.

11. Family according to one of Claims 1 to 10, **characterized in that**

- the height of the bushings evolves by intervals of 1.5875 mm.

12. Family according to one of Claims 1 to 11, **characterized in that**

- two successive devices of one and the same subfamily having a difference in height of 1.5875 mm have clamping ranges which overlap by 0.79375 mm.

13. Family according to one of Claims 1 to 12, **characterized in that**

- the screw head is cylindrical or countersunk in shape and the associated bushing is adapted to accommodate this screw having a cylindrical or countersunk head.

Fig. 1

Fig. 2

**Fig. 3**

**Fig. 4**

**EP 2 440 795 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4048898 A
- US 4702658 A
- US 3270410 A